# FASCICULE DE BREVET EUROPEEN

(11) **EP 1 192 833 B1**
(45) Date de publication et mention de la délivrance du brevet: **19.01.2005**
(21) Numéro de dépôt: 00945982.7
(22) Date de dépôt: 22.06.2000
(51) Int. Cl.: H04Q 11/04, H04L 12/64

(54) **PROCEDE POUR LA GESTION DU DECODAGE ET DE LA RESTITUTION D'UN SIGNAL SONORE DANS UN SYSTEME DE TRANSMISSION ASYNCHRONE**
VERFAHREN ZUR VERWALTUNG DER TONSIGNALKODIERUNG UND -WIEDERGABE IN EINEM ASYNCHRONEN ÜBERTRAGUNGSSYSTEM
METHOD FOR DECODING AND RETRIEVING A SOUND SIGNAL IN AN ASYNCHRONOUS TRANSMISSION SYSTEM

(30) Priorité: 24.06.1999 FR 9908081
(43) Date de publication de la demande: 03.04.2002
(73) Titulaire: FRANCE TELECOM, 75015 Paris (FR)
(72) Inventeur: DELEAM, David, F-22700 Perros Guirec (FR); KOVESI, Balazs, F-22300 Lannion (FR); PETIT, Jean-Pierre, F-22220 Minihy Tréguier (FR)
(74) Mandataire: Callon de Lamarck, Jean-Robert
(86) Numéro de dépôt international: PCT/FR2000/001734
(87) Numéro de publication internationale: WO 2001/001727

(56) Documents cités:
- EP-A- 0 743 773
- WO-A-99/17584
- US-A- 4 703 477
- US-A- 5 790 538
- US-A- 5 825 771

## Description

La présente invention est relative à un procédé de gestion de l'asynchronisme d'une transmission audio.

### PRESENTATION GENERALE DU DOMAINE DE L'INVENTION

De façon générale, l'invention se rapporte aux systèmes de transmission utilisant des codeurs de parole à débit réduit, dans lesquels les signaux ne transportent pas l'horloge de référence du système de codage de la source (fréquence d'échantillonnage du codeur). Ceci est le cas par exemple pour les transmissions de type IP (protocole internet) ou encore pour les transmissions discontinues, etc.

Un but général de l'invention est de résoudre les problèmes de production de flux continu de parole ou de son décodés rencontrés avec de tels systèmes.

Traditionnellement les réseaux de communications téléphoniques et de voies sons ont utilisé des systèmes de transmission analogiques et de multiplexage par répartition en fréquence (groupe primaire, modulation d'amplitude et de fréquence). Dans ces conditions, le signal de parole (ou de musique ; le terme parole sera utilisé de manière générique dans la suite de ce document) est converti en signal électrique par un microphone et c'est ce signal analogique qui est filtré et modulé pour être présenté au récepteur qui l'amplifiera avant de le présenter au système de restitution (écouteur, haut-parleur, etc.).

Depuis un certain nombre d'années, les techniques de transmission et de commutation numérique ont peu à peu remplacé les techniques analogiques. Dans ces systèmes appelés MIC (modulation par impulsion ou PCM en anglais pour Pulse Code Modulation), le signal de parole est échantillonné et converti en numérique à l'aide d'un convertisseur numérique analogique (CNA dans la suite) piloté par une fréquence d'échantillonnage fixe dérivée d'une horloge maîtresse délivrée par le réseau et connue également du système de réception. C'est le cas pour les URA et URN (Unité de raccordement d'abonné analogique et numérique) du réseau de télécommunications. Le signal numérique reçu par le destinataire (au sens large) est converti en analogique afin de pouvoir être écouté à l'aide d'un convertisseur numérique analogique (CNA dans la suite) piloté par une horloge de même fréquence que celle utilisée par le CAN de la source. Dans ces conditions, le système complet est parfaitement synchrone et c'est le cas généralement des systèmes actuels de commutation et de transmission. Ceux ci peuvent inclure des systèmes de réduction de débit (par exemple pour le signal téléphonique, passer de 64 kbit/s à 32, 16 ou 8 kbit/s). C'est le réseau (ou les systèmes terminaux comme par exemple dans le cas du RNIS (ISDN en anglais)) qui se charge des opérations de CAN, de codage, de décodage (codage et décodage pris ici dans le sens réduction de débit) et de CNA. Les horloges sont toujours distribuées et la chaîne CAN, codeur de parole, transmission et commutation, décodeur de parole et finalement CNA est parfaitement isochrone. Il n'y a pas de pertes ou de répétitions d'échantillons de parole dans le décodeur.

Les techniques de transmissions synchrones décrites précédemment nécessitent la présence d'une horloge de référence dans tout le réseau. De plus en plus, les techniques de transmission (de données dans un premier temps) font appel à des techniques asynchrones et par paquets (protocole IP, ATM). Dans de nombreuses nouvelles situations, le décodeur n'a plus aucune référence concernant la fréquence d'échantillonnage utilisée par le codeur et doit reconstituer par ses propres moyens une horloge de décodage qui essaye de suivre la référence au codeur. La présente invention est donc particulièrement intéressante pour les systèmes de téléphonie sur relais de trame ("FRAME RELAY" selon la terminologie anglo-saxonne), pour la téléphonie sur ATM ou pour la téléphonie sur IP. La technique présentée peut être facilement utilisée dans d'autres domaines de transmission de la parole ou des sons pour lesquels il n'y a pas de transmission effective de la référence d'horloge du codeur vers le décodeur.

### PRESENTATION DE L'ETAT DE LA TECHNIQUE

### Exposé du problème général

Le problème général posé par les systèmes de transmission auxquels s'appliquent l'invention est de pallier le fait que le décodeur de parole ou de son ne possède pas de référence d'horloge liée au codage de la source.

On peut à cet égard distinguer deux cas : ceux correspondant à un « asynchronisme faible » et ceux correspondant à un « asynchronisme fort ».

### « L'asynchronisme faible »

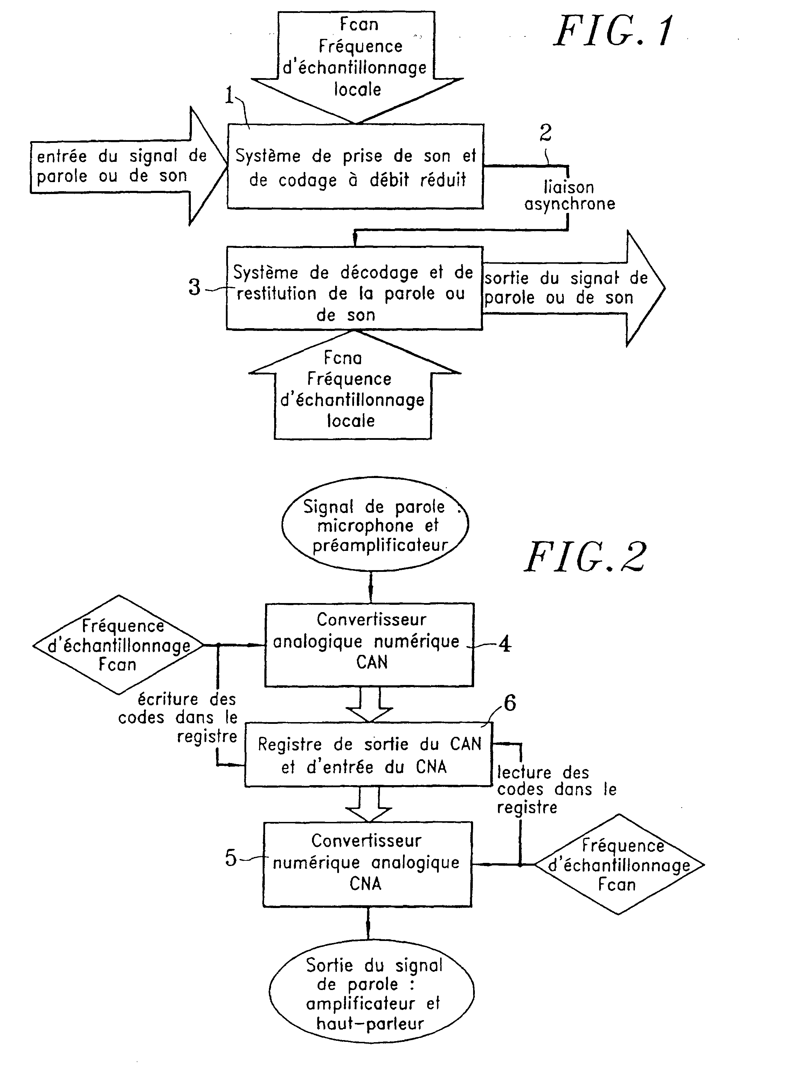

A titre illustratif, on se place dans le cas d'un système de transmission qui comporte, ainsi qu'illustré schématiquement sur la figure 1 :
- une source de codage 1 comprenant un convertisseur analogique numérique piloté par une horloge de référence de fréquence Fcan égale à 8 kHz (pour fixer les éléments de calcul dans la suite de la présentation) et un codeur de parole (plus ou moins complexe et réduisant de manière plus ou moins importante le débit à transmettre) ;
- un système de transmission asynchrone (schématisé par la liaison 2) qui transmet les informations produites par la source de codage en utilisant sa propre horloge de transmission et ses propres protocoles (par exemple, on peut imaginer que le codeur de parole produit un débit de 8 kbit/s et que le système de transmission est constitué par une liaison de type asynchrone RS.232 à 9600 bit/s) ;
- un système de réception et de décodage 3 recevant les informations transmises par la liaison asynchrone (dont le débit doit être évidemment un peu plus élevé que le débit brut de codage, par exemple 9600 bit/s au lieu de 8000 bit/s) et chargé de produire le signal après un décodage (décompression) et en envoyant le signal produit vers un convertisseur numérique analogique connecté à un transducteur de type haut-parleur, combiné téléphonique, casques ou carte son installée dans un PC.

On comprend que puisque le système de réception et de décodage 3 ne dispose d'aucune référence d'horloge, il doit mettre en oeuvre une stratégie afin de pallier ce manque de synchronisation entre le codeur et le décodeur.

Quelque soit la technique de codage utilisée ou le type de transmission qui ne transporte pas directement une horloge, des marqueurs temporels dans la trame transmise ou des indications sur les instants de transmission, on peut ramener le problème évoqué précédemment (en faisant abstraction du codeur de parole, du système de transmission asynchrone et du décodeur de parole) à un système comprenant, ainsi qu'illustré sur la figure 2 :
- un convertisseur analogique numérique 4 chargé de convertir d'analogique en numérique des sons ou des signaux de parole à une fréquence d'échantillonnage fixée par un oscillateur local ;
- un convertisseur numérique analogique 5 chargé de reproduire les sons vers un transducteur approprié au domaine d'utilisation concerné et qui fonctionne sur une fréquence d'échantillonnage donné par un oscillateur local à priori de même fréquence mais qui n'est jamais exactement à la même fréquence pour des coûts de réalisation tolérable (il existe des sources de fréquence très stables et très précises mais elles doivent être compensées en température et leur coût est rédhibitoire pour des réalisations industrielles de grand volume) ;
- un registre numérique 6 dans lequel le convertisseur analogique 4 écrit avec sa fréquence d'échantillonnage (F_{CAN}), ce registre étant lu avec la fréquence d'échantillonnage (F_{CNA}) du système de reproduction par le convertisseur numérique analogique (le CNA).

On comprend que puisque les deux horloges (de fréquences F_{CAN} et F_{CNA}) sont différentes, de temps en temps le CNA va relire deux fois la même information (si Fcna est supérieure à Fcan) ou dans le cas contraire (Fcna est inférieure à Fcan) une information va être écrasée par le CAN avant que le CNA ne puisse la relire.

Les oscillateurs que l'on trouve couramment dans le commerce sont caractérisés par une précision de fonctionnement (dans une certaine gamme de température).

Les oscillateurs à 50 ppm (partie par million) sont assez courants et servent de base au calcul suivant qui indiquera la fréquence des pertes ou des répétitions d'échantillons pour une fréquence d'échantillonnage de 8 kHz (le lecteur pourra aisément calculer que pour des fréquences d'échantillonnage plus élevées la fréquence des sauts et des répétitions s'obtient dans le rapport des fréquences d'échantillonnage ; plus la fréquence d'échantillonnage est élevée et plus la fréquence des sauts ou des répétitions sera élevée).

Dans les conditions les moins favorables, on dispose d'un CAN fonctionnant à 8000*(1 + 50.e-6) et d'un CNA fonctionnant à 8000*(I -50.e-6). Dans cet exemple particulier, la période des sauts (suppression d'échantillons dans le CNA puisque Fcna est inférieure à Fcan) est simplement calculée en comptant le nombre de période du CNA (période supérieure à celle du CAN) qui produit une valeur égale à cette période du CNA quand elle est multipliée par la différence des périodes.

Soit Pcna la période du CNA (ici 1/8000*(I - 50.e-6)) et Pcan la période du CAN (ici 1/8000*(I + 50.e-6)) ; on doit donc avoir N*(Pcna-Pcan) = Pcna. N représente le nombre d'opérations élémentaires qui se décalent de la différence de périodes. En posant 50.e-6 = ε et en appliquant les règles de simplification courantes pour les petits nombres, on obtient N = I/(2*ε). Dans notre exemple cela donne immédiatement la période des sauts qui sera proche de 1.25 secondes. Si la précision des oscillateurs locaux est améliorée (par exemple en passant de 50.e-6 à 5.e-6) alors la période des sauts augmentera (ici ce sera toutes les 12.5 secondes).

Ce phénomène de " glissement " d'une horloge par rapport à une autre va entraîner lorsque l'on se place dans un système complet de transmission avec des codeurs audio fonctionnant sur des trames de signal, des absences de trames de parole (aucune trame à décoder dans le temps imparti pour le décodage) ou une sur abondance de trames (deux trames à décoder au lieu d'une dans le temps imparti). En effet, en prenant l'exemple d'un codeur de parole fonctionnant avec des trames de 30 ms à 8 kHz, soit 240 échantillons, au niveau du récepteur et plus particulier du décodeur on s'attend à recevoir dans un créneau temporel de 30ms, une trame à décoder, afin d'assurer la continuité du rendu de signal de parole. Or, si par exemple, Fcan est inférieur à Fcna, nous allons avoir, en prenant les hypothèses précédentes, une absence de trame d'échantillons à décoder par le système de restitution sonore toutes les 240 * 1,25 = 300 secondes, et à l'inverse deux trames au lieu d'une (soit une trame à « supprimer ») à décoder toutes les 300 secondes. Dans ce cas, le phénomène gênant du saut ou de la répétition d'échantillons devient vraiment fort désagréable puisque c'est tout un bloc de signal qui est sauté ou répété et nécessite donc une gestion adéquate.

### « L'asynchronisme fort »

Certains types de transmissions amplifient ce problème d'asynchronisme dû au phénomène de « glissement » des horloges explicité précédemment. C'est ce qu'on entend ici par « asynchronisme fort ».

En effet, lorsque !a transmission n'est pas parfaite et introduit des pertes d'échantillons ou de trames d'échantillons et aussi lorsque la transmission génère une gigue sur l'arrivé des échantillons, non liées à l'horloge d'émission ou à l'horloge de réception, mais liée à d'autres mécanismes de la chaîne de transmission possédant leur propre horloge, le système de réception peut alors être confronté à l'absence de plusieurs trames, ou à la surabondance de plusieurs trames. Ceci est par exemple le cas pour des réseaux de type IP avec le phénomène de pertes de paquets et celui de la gigue introduite lors du routage des paquets. Ces phénomènes vont fortement perturber la continuité du rendu acoustique du signal audio. En effet, dans le cas de pertes de paquets ou d'une gigue ayant retardée un ou plusieurs paquets, le système de rendu va se trouver sans aucun échantillon (ou aucune trame d'échantillons) à envoyer au CNA pour assurer la continuité du rendu acoustique. Et inversement, dans le cas d'une forte gigue, le système de restitutions peut se retrouver avec beaucoup trop de trames ou d'échantillons à envoyer en même temps au CNA. En effet, en présence d'une forte gigue, la transmission des trames de signal sonores peut s'effectuer sous forme de rafales, créant ainsi de forts phénomènes de trous et de sur abondance de trames d'échantillons.

On notera que lors de l'utilisation de codeurs de parole fonctionnant avec un système de transmission de type VAD/DTX/CNG (Voice Activity Detector/Discontinous Transmission/Comfort Noise Generation selon la terminologie anglo-saxonne), on introduit aussi un mécanisme qui est similaire au cas de la perte de paquet, puisqu'en cas de silence, l'émetteur cessera d'émettre des trames d'échantillons. L'arrêt d'émission d'échantillons peut en effet au niveau du récepteur être assimilé au phénomène de la perte de paquet ou encore au cas où l'horloge du CAN est plus rapide que celle du CNA, ce qui amène comme cela a été montré ci-dessus des trous dans le signal au niveau du récepteur.

" L'asynchronisme fort " se distingue donc de " l'asynchronisme faible " en impliquant non plus uniquement des sauts et/ou répétitions de manières cycliques, mais aussi des trous dans le signal et/ou de la surabondance de signal et ceci de manière non cyclique et multiple.

### Description des différentes méthodes existantes.

On connaît principalement deux méthodes pour pallier les inconvénients dus au fait que le décodeur de parole ou de son ne possède pas de référence d'horloges.

La première consiste simplement à procéder comme cela a été énoncé dans les paragraphes décrivant " l'asynchronisme faible ", c'est à dire en sautant ou en répétant des échantillons. Le système de décodage produit des échantillons à un rythme à peu près égal à celui du codeur et les présente au convertisseur numérique analogique avec ce rythme (les moyens de réalisation de ce système de reconstruction sont connus de l'homme de l'art). Dans certains cas, par exemple dans le cas "d'asynchronisme fort" avec transmission sous forme de trames, il est préféré en l'absence d'échantillons à jouer, l'envoi de trames d'échantillons nulles au CAN, plutôt que la répétition de la trame précédente. De plus, à l'inverse lors d'un surplus d'échantillons, ceux-ci ne seront pas supprimés directement, mais une FIFO d'une certaine taille pourra être utilisée pour absorber en partie la gigue. Un remplissage trop important de cette FIFO déclenchera une vidange partielle ou complète de cette FIFO créant ainsi à nouveau des sauts dans le rendu sonore.

La deuxième méthode, plus élaborée et plus performante, nécessite la mise oeuvre de boucle de récupération d'horloge matérielle asservie par l'état de remplissage d'une mémoire tampon du signal à décoder (ou à transmettre comme par exemple dans les AAL1 de l'ATM). Cette méthode d'asservissement tente grâce à la boucle de récupération d'horloge de récupérer la fréquence d'échantillonnage de la source. L'état de remplissage du buffer de réception produit un signal de commande afin d'asservir une boucle PLL (numérique ou analogique).

La première méthode présente une extrême simplicité de réalisation mais a un gros défaut lié à la qualité des sons reproduits. En effet, un saut ou une suppression toutes les 1.25 secondes peut être très désagréable à l'écoute, cas de " l'asynchronisme faible ", avec correction de l'asynchronisme au niveau de l'échantillon. De même, dans le cas d'un système fonctionnant avec des trames d'échantillons, les répétitions ou les blancs introduits, ainsi que les discontinuités dans le signal par suppression de trames amplifient la dégradation de qualité rendue fortement perceptible et fortement perturbante pour l'auditeur.

De plus, avec l'utilisation d'une mémoire premier entrant/premier sortant (FIFO), l'on risque de prendre un retard conséquent dans la transmission, ce qui nuit aussi à la qualité globale de la communication.

La deuxième méthode est, elle, beaucoup plus complexe et demande un mécanisme d'asservissement d'horloge et donc un matériel spécifique. Par contre, elle assure un synchronisme partiel et évite donc les problèmes de gestion d'asynchronisme. Néanmoins, cette méthode s'adapte mal à des systèmes de transmission discontinue, à des systèmes avec pertes de trames et aussi à des systèmes avec forte gigue. Dans ces cas, l'information de synchronisation n'est plus disponible. De plus, cette méthode n'est pas envisageable sur des plates-formes de terminaux où l'asservissement de l'horloge n'est pas possible, comme c'est notamment le cas avec des terminaux de type PC par exemple où le système de rendu acoustique utilisé serait la carte son.

On connaît déjà par le document WO/99 17 584 des descriptifs mettant en oeuvre un procédé selon le préambule de la revendication 1, ces dispositifs n'ayant qu'une mémoire tampon.

Le document US-A-4 703 477 facilite la lecture d'informations vocales en mettant en oeuvre un procédé de mise bout à bout de trames relatives à la même information vocale.

### PRESENTATION DE L'INVENTION

Un but général de l'invention est de proposer une solution aux problèmes de continuité du rendu du signal de parole en présence d'une transmission asynchrone, et ceci en agissant au niveau du récepteur, c'est à dire à la fin de la chaîne de transmission.

A cet effet, l'invention propose un procédé selon la revendication 1.

Un tel procédé est simple à mettre en oeuvre et assure une garantie de qualité en évitant d'accroître excessivement le retard de transmission et en gérant efficacement les trous dans le signal de parole. De plus, il n'implique aucun circuit d'asservissement hardware spécifique, et peut donc s'adapter rapidement à des plates-formes, terminaux et réseaux asynchrones différents.

Ce procédé est avantageusement complété par les différentes caractéristiques suivantes prises seules ou selon toutes leurs combinaisons techniquement possibles :
- on met en oeuvre une détection d'activité vocale et on supprime les trames considérées comme non actives par cette détection, lorsque le taux de remplissage est compris entre un premier et un deuxième seuil et en ce qu'on met en oeuvre un traitement de concaténation sur deux trames successives, lorsque le taux de remplissage est compris entre un deuxième et un troisième seuils ;
- le premier et le deuxième seuils sont confondus ;
- on détecte en entrée ou en sortie d'un bloc de décodage comportant une première mémoire tampon en entrée et/ou en sortie une éventuelle trame manquante ou erronée ou une éventuelle absence d'échantillons à restituer et on génère une fausse trame qui assure la continuité du rendu audio lorsqu'une telle trame manquante ou erronée ou une telle absence d'échantillons à restituer est détectée ;
- dans le cas où le bloc de décodage met en oeuvre de façon cyclique son traitement de décodage par rapport au contenu de la première mémoire tampon, on met en oeuvre avec la même fréquence cyclique la détection d'une éventuelle trame manquante ou erronée ou d'une éventuelle absence d'échantillons à restituer, cette détection intervenant suffisamment en avance par rapport au traitement de décodage de façon à permettre une génération de fausse trame en temps voulu ;
- on ne génère pas de fausse trame lorsqu'une détection de trame manquante ou erronée intervient sur une trame pour laquelle une absence d'échantillons a déjà été détectée ;
- dans le cas où le système est d'un type qui peut arrêter volontairement d'émettre des trames, on mémorise d'une trame à l'autre le type de trame précédemment générée et on détermine en fonction de cette information s'il faut générer des fausses trames ou des trames de silence ;
- dans un traitement de concaténation de deux trames successives on pondère les échantillons de façon à donner plus d'importance aux premiers échantillons de la première trame et aux derniers échantillons de la deuxième ;
- le (ou les) seuil(s) est (ou sont) adaptatif(s) ;
- un seuil est fonction du temps passé avec un taux de remplissage supérieur à un seuil donné.

L'invention concerne également un dispositif de restitution d'un signal de parole comportant une première mémoire tampon recevant des trames codées, des moyens mettant en oeuvre un traitement de décodage sur les trames mémorisées dans ladite première mémoire tampon, une deuxième mémoire tampon recevant des trames décodées en sortie des moyens de décodage, des moyens de restitution sonore recevant les trames en sortie de la deuxième mémoire tampon, caractérisé en ce qu'il comporte en outre des moyens pour mettre en oeuvre le procédé précité.

Comme on le comprendra à la lecture de la description qui suit, ces moyens sont essentiellement des moyens informatiques.

### PRESENTATION DES FIGURES

D'autres caractéristiques et avantages de l'invention ressortiront encore de la description qui suit qui est purement illustrative et non limitative et qui doit être lue en regard des dessins annexés sur lesquels :
- la figure 1 est une représentation schématique d'une chaîne de transmission asynchrone ;
- la figure 2 est un schéma illustrant une modélisation d'une telle chaîne de transmission ;
- la figure 3 est un schéma d'un dispositif de réception ;
- la figure 4 illustre des signaux obtenus en mettant en oeuvre un traitement de concaténation proposé par l'invention.

### DESCRIPTION DETAILLEE D'UN OU PLUSIEURS MODES DE REALISATION

Le procédé de gestion de l'asynchronisme de la transmission proposé par l'invention met en oeuvre deux traitements correspondant à la prise en charge des deux phénomènes précédemment exposés qui sont l'absence d'échantillons et le surplus d'échantillons.

### 1. Présentation de la chaîne de rendu sonore d'une application classique de transmission.

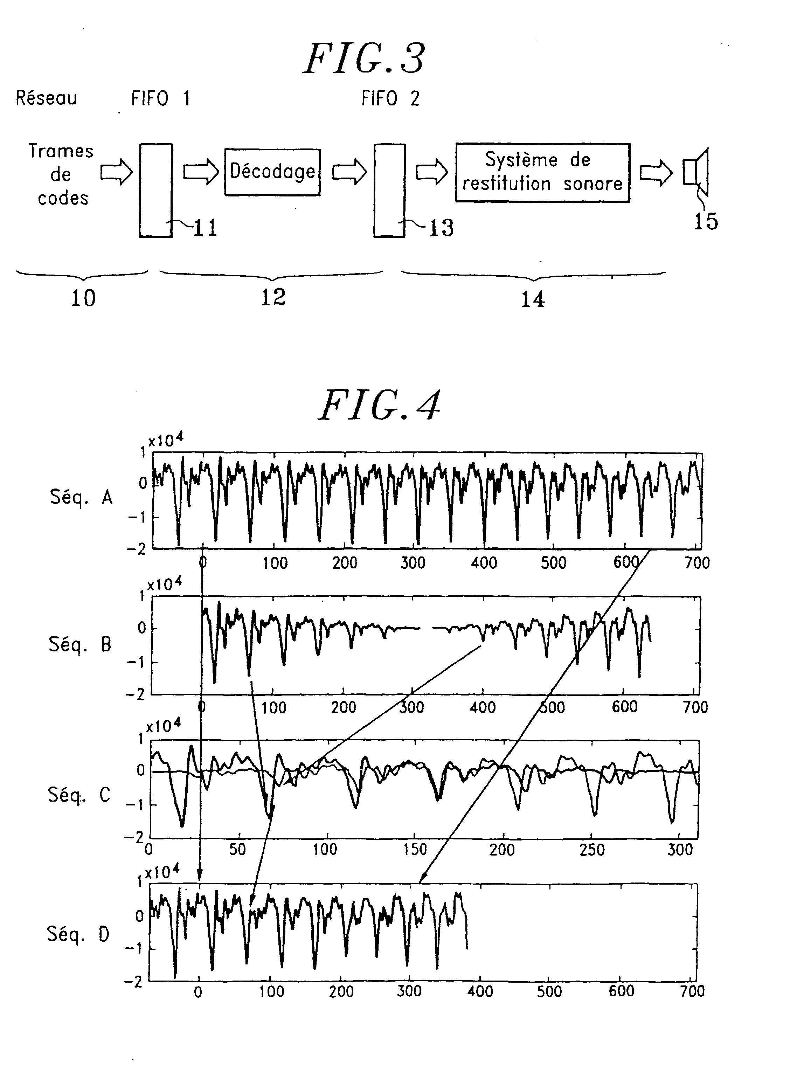

Ainsi que cela a été illustré sur la figure 3, la chaîne de rendu du signal de parole se décompose en trois éléments :
- Un bloc 10 d'attente de réception d'échantillons ou de trames de codes provenant du réseau. Ce bloc 10 contient une mémoire 11 de type FIFO ou mémoire tampon de type circulaire (que l'on appellera " FIFO 1 " dans la suite du document) permettant de stocker temporairement les trames avant leur décodage.
- Un bloc 12 de décodage qui prend les trames issues du bloc 10, les décode, et les stocke à son tour dans une mémoire FIFO 13 (que l'on appellera " FIFO 2 " dans la suite du document).
- Un bloc de rendu 14 qui va prendre les trames d'échantillons décodés, et les envoyer au système de rendu sonore 15 quel qu'il soit.

Suivant les terminaux et l'organisation de cette chaîne, la fréquence de l'horloge de rendu sonore (celle du convertisseur numérique analogique Fcna) n'est pas forcément directement liée à tous ces blocs. Le bloc 14 étant en liaison directe avec le système rendu, celui-ci est directement lié à la fréquence Fcna. Les autres blocs peuvent être en connexion plutôt avec la cadence d'arrivée des trames en provenance du réseau qu'avec cette fréquence Fcna. En effet, en prenant l'exemple d'un terminal pourvu d'un système multitâches, et où chaque bloc serait effectué par une tâche spécifique, les tâches 10 et 12 pourraient être liées donc à la réception de trames. La tâche 10 attend une trame du réseau, celle-ci est ensuite décodée par la tâche 12 et placée dans la mémoire " FIFO 2 ".

Quant à la tâche 14 cadencée par Fcna, elle va envoyer en allant puiser dans la mémoire " FIFO 2 " des échantillons en continu au système de rendu sonore.

On voit donc qu'en cas " d'asynchronisme fort ou faible", c'est la gestion de la mémoire " FIFO 2 " qui va demander un soin particulier. De même, si la tâche 12 avait été liée fortement à la tâche 14, cette fois cela aurait été la mémoire "FIFO 1 " qui aurait demandé une attention particulière.

Le mécanisme conforme à un mode de mise en oeuvre de l'invention va être présenté en appliquant la gestion sur la mémoire " FIFO 2", mais l'on verra au cours des explications comment le transposer moyennant certaines adaptations, à la gestion de la mémoire " FIFO 1".

### 2. Absence d'échantillons

Pour assurer un rendu sonore continu en cas d'absence d'échantillons, on traite en parallèle les deux sources potentielles d'absence d'échantillons à restituer. La première correspond à l'information de pertes de paquets, et la seconde correspond à l'information d'absence d'échantillons à restituer (par exemple « FIFO 2 » vide), alors qu'il est nécessaire d'envoyer des échantillons au système de rendu sonore.

### 2.1 Perte de trames, ou trames erronées

Le traitement sur les pertes de trames ou les trames erronées nécessite de disposer d'un système de transmission donnant accès à l'information sur la perte de trames ou la réception de trames erronées. Ceci est souvent le cas, dans les systèmes de transmission.

Par exemple, pour des réseaux IP, il est possible d'utiliser le marquage des paquets de données issu de la couche RTP, qui donne le nombre exact d'échantillons perdus entre deux réceptions de paquets de codes audio. Cette information de pertes de trames ou dans le cas IP de perte de paquets (contenant une ou plusieurs trame de parole), ne sera généralement connue qu'à la réception du paquet suivant le ou les paquets perdus.

Il n'y a pas nécessairement un intérêt à agir, alors qu'une ou plusieurs trames valides peuvent être décodées. En fait, avec les codeurs de parole de nouvelle génération (codeurs CELP, codeurs par transformée, ...) dans un souci d'assurer un maintien de la qualité du rendu acoustique, il est souvent nécessaire d'assurer un certain synchronisme entre le codeur et le décodeur. La perte de ce synchronisme codeur-décodeur peut être compensée en utilisant des algorithmes de correction de pertes de trames liées au codeur de parole utilisé. Ces algorithmes sont par exemple prévus dans la norme de certains codeurs de parole (ex : norme ITU G.723. 1). Avec l'utilisation de codeurs plus simples, ce mécanisme n'est pas forcément nécessaire.

Lorsqu'un grand nombre de trames à été perdu, on peut limiter le nombre de " fausses " trames d'échantillons à générer pour éviter de remplir inutilement la mémoire " FIFO 2 ". Le but du traitement de génération de fausses trames est de remplir les trous de manière à assurer une continuité du signal, mais aussi à lisser les variables internes du décodeur pour éviter de trop grandes divergences lors du décodage de la trame valide suivant les trames invalides ou perdues, et ainsi éviter une discontinuité audible. Après la génération de quelques trames l'on peut considérer les variables comme lissées, et donc limiter cette génération de fausses trames à un petit nombre de trames (par exemple 4 à 6), lorsqu'un grand nombre de trames ont été perdues.

Comme on l'aura compris, on asservit ainsi le traitement par rapport à l'information de pertes de trames.

Un traitement similaire est mis en oeuvre par rapport à l'information de trames dites" trames non valides ". Cette information est transmise au décodeur par la partie réseau du récepteur et ce suffisamment tôt pour permettre la mise en oeuvre d'un algorithme de corrections de trames qui en prenant en compte cette trame non valide permet d'assurer une continuité du signal, ainsi que d'éviter une autre source d'absence d'échantillon dans la mémoire " FIFO 2 ".

En résumé, ce premier traitement correspond donc à la gestion d'une information du type " n trames perdues" ou " trame reçue non valide " venu de la couche réseau du récepteur. Cette gestion se caractérise par la mise en oeuvre d'un algorithme de correction de pertes de trames (aussi appelé dans ce document algorithme de génération de "fausses" trames). Ce premier traitement agit donc au niveau de la tâche de décodage et alimente la mémoire " FIFO 2 ".

### 2.2 Absence d'échantillons à restituer

Ce deuxième traitement est lié à l'horloge issue de la tâche 14, c'est à dire à l'horloge de fréquence Fcna. En effet, comme indiqué précédemment, la mémoire « FIFO 2 » (ou « FIFO 1 » si la tâche 12 est imbriquée à la tâche 14) peut ne plus contenir d'échantillons alors qu'il est nécessaire de fournir des échantillons au système de restitutions sonores. Il convient donc de fournir des échantillons à ce système de restitution, et si possible éviter de restituer des zéros (ceci dégradant fortement le signal sonore).

Ce deuxième traitement peut s'analyser comme une boucle de rétroaction sur le décodage des trames. Cette boucle déclenche l'appel à l'algorithme de corrections de pertes de trames et doit de ce fait être activée suffisamment tôt pour permettre l'exécution de l'algorithme et l'envoi des échantillons au système de restitutions sonores. Suivant la plate-forme, l'appel à cette rétroaction pourra être différent.

Cette boucle peut être mise en oeuvre des deux manières qui vont maintenant être décrites.

Dans le cas d'un récepteur mono-tâche (par exemple sur un DSP sans RTOS (Real Time Operating System selon la terminologie anglosaxonne), la partie décodeur audio est complètement liée à l'horloge du CNA (Fcna), et est donc en permanence en attente d'une trame à décoder de manière cyclique. Par exemple, avec un codeur de parole utilisant des trames de 30 ms, on construit des boucles d'attentes de période multiple de 30 ms.

Ainsi, dans le cas d'une boucle de 30 ms, le décodeur va, toutes les 30 ms, être en attente d'une trame à décoder placée dans la mémoire "FIFO 1" (ce qui peut juste correspondre au passage d'une trame de la couche réseau à la tâche 12). A l'arrivée de celle-ci, il la décode et la place dans la mémoire " FIFO 2 " pour l'envoi au CNA. Le traitement de rétroaction sera mis en oeuvre par constatation à T=TO+30 ms - Tc de l'absence de trame à décoder dans la mémoire " FIFO 1",
où TO = temps du début de la boucle d'attente de 30 ms,
et Tc = temps d'exécution de l'algorithme de génération de fausses trames avec une marge supplémentaire correspondant aux interruptions et/ou aux autres traitements annexes pouvant avoir lieu avant la fin de la boucle.

Le traitement est donc mis en oeuvre avec la butée temporelle d'attente Tb (temps de boucle) - Tc (temps de calcul + marge).

Dans le cas d'un récepteur multitâche (cas d'un terminal PC par exemple), le temps n'est pas géré de manière aussi précise et donc un traitement un peu différent doit alors être mis en oeuvre. (Remarque : ce traitement reste assez proche du précédent, car il cherche aussi à prendre en compte le temps Tc).

Dans un tel cas, on ne dispose souvent que de boucles d'attente liées à des événements, par exemple le fait que des paquets aient été reçus par le réseau, ou encore le fait que la mémoire tampon " n " (contenant une ou plusieurs trames d'échantillons) envoyée précédemment au système de restitution sonore a été lue par le CNA, et est donc à nouveau disponible pour nouvel envoi au CNA.

Suivant l'implantation et la nécessité de répondre rapidement ou non à l'événement, il est possible de marquer une temporisation avant le remplissage de cette mémoire tampon pour re-émission vers le CNA. Cette temporisation est choisie de façon à laisser suffisamment de temps pour l'exécution de l'algorithme de génération de " fausses " trames (si besoin).

Puis, à l'issue le cas échéant de cette temporisation, le traitement vérifie la présence de suffisamment d'échantillons dans " FIFO 2 " (remarque : cela peut être dans " FIFO 1 " si la gestion est placée à ce niveau), et dans le cas contraire demande la génération du nombre de fausses trames adéquat pour remplir la mémoire tampon " n ".

Dans le cas où le système est tel qu'il faut remplir "immédiatement" la mémoire tampon "n", le contrôle de la disponibilité d'échantillons et l'appel éventuel au traitement de génération de " fausses trames " sont mis en oeuvre directement après chaque envoi de la mémoire tampon au CNA, afin que les échantillons générés soient déjà dans la mémoire " FIFO 2 " lors de l'événement " mémoire tampon " n " disponible".

Ainsi, quel que soit le récepteur, le traitement constate l'absence d'échantillons à envoyer au système de restitutions sonores en mettant en oeuvre un contrôle du remplissage de la mémoire tampon "FIFO 2" (ou "FIFO 1 " suivant la gestion de la chaîne de rendu sonore) et active l'algorithme de génération de " fausses " trames pour générer les échantillons manquants.

Comme on l'aura compris, le deuxième traitement répond d'abord au problème de " glissement " des horloges, et plus précisément au cas où l'horloge de réception (Fcna) est plus rapide que l'horloge d'émission (Fcan). Il intervient aussi vis-à-vis du phénomène de pertes de trames, car celui-ci peut amener une absence d'échantillons à envoyer au CNA avant que ne soit détectée la perte de trames, cette détection n'intervenant qu'à la réception de la trame suivant la perte.

Pour lier les actions du premier et du deuxième traitement, on interdit au premier traitement de générer des " fausses " trames lors d'une détection de pertes de trames, si les trames correspondantes viennent d'être générées par le deuxième traitement.

On utilise à cet effet des drapeaux, ainsi que des compteurs déterminant le nombre d'échantillons générés par le deuxième traitement.

### 2.3.Actions spécifiques dans le cas de codeurs de parole utilisant la fonctionnalité VAD/DTX/CNG.

Des codeurs utilisant un système VAD/DTX/CNG peuvent arrêter volontairement d'émettre des trames ; dans ce cas, l'absence d'échantillons ne doit pas être considérée exactement comme une perte de trames, mais comme un moment de silence. Le seul moyen de déterminer si la trame à générer doit être du silence ou correspond à une trame perdue, est de connaître le type de la trame précédemment générée (soit trame de signal ou trame correspondante à une trame perdue (FSF), soit trame de mise à jour du bruit (SID), soit trame de silence (NOT)) A cet effet, on mémorise le type de trame générée, et on détermine lors de la génération de trames pour absence de trame ou perte de trame, s'il faut générer des fausses trames issues de l'algorithme de corrections de pertes de trames, (cas de la trame précédente de type FSF), ou des trames de silence en activant le décodeur de manière adéquate (cas de la trame précédente SID ou NOT).

### 3. Surabondance d'échantillons à restituer.

Pour traiter le cas de surabondance d'échantillons à restituer, on met en oeuvre un traitement de vidange des trames, avec suppression partielle ou complète de certaines trames avant leur éventuelle prise en compte par le système de rendu sonore.

Ce traitement permet une mémorisation des trames dans les mémoires tampons jusqu'à certains seuils déclenchant des actions pour limiter cette mémorisation et la prise de retard sur la chaîne de communication qu'elle implique. Cette mémorisation limitée permet en effet de tenir compte des phénomènes de gigues de réception de trame en rafale et de glissement d'horloge tout en limitant le retard de transmission.

### 3.2 Traitement de vidange

L'accumulation de trames est d'abord détectable au niveau de la mémoire " FIFO 1 ", puis est ensuite reportée au niveau de la mémoire « FIFO 2 ».

Le procédé proposé gère l'information du remplissage d'une mémoire tampon de référence, c'est à dire « FIFO 1 » ou " FIFO 2 " suivant l'implantation des tâches 10, 12 et 14 (explicitées précédemment) dans le récepteur. En effet, si les tâches 12 et 14 sont liées, l'information de remplissage qui est utilisée par le procédé est celle relative à la mémoire " FIFO 1 " qui fait tampon entre le réseau et le système de rendu sonore. De la même façon, si les tâches 10 et 12 sont liées, c'est la mémoire " FIFO 2 " qui fait tampon et donc c'est son taux de remplissage qui est pris en considération pour le traitement de gestion.

Le traitement va maintenant être explicité en se plaçant dans le deuxième cas de figure. Le premier cas s'en déduit de façon immédiate par transposition.

Afin de conserver au mieux une synchronisation entre le codeur et le décodeur et donc une restitution sonore optimale, on choisit de décoder toutes les trames venant du réseau. Le traitement décide en fonction de l'information de remplissage l'action liée à la trame décodée. Cette action est détaillée par la suite. Pour activer le traitement, des seuils de remplissage sont utilisés. Ces seuils définissent des niveaux d'alarme de remplissage de la " FIFO ". Pour agir de manière la moins audible possible (c'est-à-dire pour limiter la dégradation de qualité), deux niveaux d'actions sont choisis. Un premier niveau (niveau d'alarme 1) correspond à un niveau non critique de remplissage excessif (loin du remplissage maximal toléré), le second (niveau d'alarme 2) correspond lui à une action obligatoire sur chaque trame (moyennement proche du remplissage maximal toléré). Un troisième niveau (niveau d'alarme 3), dit de sécurité (pour éviter des débordements de mémoire, ou autre problème) a été défini. Il correspond à un remplissage proche du maximal toléré. Ce niveau d'alarme n'est en fait jamais atteint si les actions des deux seuils précédents sont bien effectuées et si les seuils sont correctement définis.

Lors de chaque décodage, l'information de remplissage est comparée aux seuils pour connaître l'état de la " FIFO " (en alarme ou non), et le cas échéant le niveau de l'alarme.

Si l'état obtenu, n'est pas un état d'alarme, aucune action est effectuée, et la trame décodée est stockée dans " FIFO 2 ".

Dans le premier état d'alarme, on considère qu'au moins 50% du signal issu d'une conversation est inutile ; on supprime donc, dans ce niveau d'alarme, toutes les trames ne présentant que très peu d'informations. Pour cela, ce traitement peut mettre en oeuvre un DAV simple (DAV = Détecteur d'Activité Vocale) qui scrute toutes les trames d'échantillons après leur décodage et permet de décider de leur écriture ou non dans " FIFO 2 ". Le traitement peut aussi décider à partir d'informations directement puisées dans la trame de codes de l'importance ou non de l'information qu'elle contient. Dans cet état d'alarme, toute trame considérée comme ne contenant que du bruit, ne sera pas stockée dans " FIFO 2 " pour une future restitution sonore.

Dans le second état d'alarme (niveau critique), il est nécessaire d'agir sur chaque trame pour limiter très fortement l'accroissement du remplissage de la mémoire " FIFO 2 ". A ce niveau le traitement précédent (c'est à dire celui mis en oeuvre pour le niveau d'alarme 1) reste actif. Mais cette fois, il est imposé de réduire deux trames consécutives à une trame ou moins. Une décision est donc prise à partir de deux trames d'échantillons non " silencieuses " (en effet, si une trame est " silencieuse ", elle n'est tout simplement pas écrite dans " FIFO 2 " (cas de l'état d'alarme 1 inclus dans l'état d'alarme 2)). L'action sur deux trames consécutives n'est donc engagée que lorsqu'une trame est détectée comme non « silencieuse ». Cette trame est d'abord mémorisée, ensuite si la seconde trame est " silencieuse ", alors c'est cette première trame qui est écrite dans " FIFO 2 ".

Dans le cas où les deux trames contiennent des informations importantes, il convient de remplacer ces deux trames par une seule minimisant la perte d'information et la dégradation de qualité. C'est cette trame résultante qui sera stockée dans « FIFO 2 ». Toute solution efficace pouvant effectuer cette tâche peut être utilisée et activée dans ces conditions (second état d'alarme, et deux trames non « silencieuses »). Deux exemples d'algorithmiques pour effectuer cette tâche sont présentés ci-dessous.

Selon une première solution d'algorithmique, on remplace les deux trames bout à bout par une seule trame où chaque coefficient xⱼ (avec j allant de 0 à N-1 (N nombre d'échantillons par trame)) prend la valeur (xᵢ + xᵢ₊₁)/2 (avec i allant de 0 à 2*N-1, les xᵢ provenants des deux trames originales). Cette solution revient en quelque sorte à faire du sous échantillonnage lissé. La fréquence du signal restituée est alors double sur cette trame. Cependant, il a été constaté par les inventeurs que lorsque l'état d'alarme 2 n'est pas très fréquent, cette solution suffit pour maintenir la qualité du rendu sonore.

Selon une deuxième solution, on met en oeuvre une détection de la hauteur du signal pour compacter les deux trames en une pseudo-trame de longueur inférieure ou égale à celle d'une trame. Le nombre d'échantillons contenus dans cette pseudo-trame est déterminé par l'information de fréquence de fondamental ("pitch" selon la terminologie anglo-saxonne), mais est de toute manière inférieure ou égale à la longueur d'une trame normale, tout en étant proche de cette longueur de trame. L'algorithme utilisé permet d'assurer une continuité du signal de rendu sans trou audible, ni doublement de fréquence, tout en divisant le stockage du signal d'un facteur supérieur ou égal à 2. Ceci est explicité plus en détails au paragraphe 3.4 ci-après. De plus, il minimise aussi ainsi la perte d'informations sonores, en supprimant en fait moins de 50 % de l'information.

On notera que dans le cas où le récepteur met en oeuvre son traitement à partir d'une analyse de " FIFO 1 ", le décodeur étant directement relié au système de rendu sonore, il se doit de générer un nombre d'échantillons suffisants, soit dans notre cas d'assurer la mise à disposition d'au moins une trame d'échantillons dans " FIFO 2 ". L'algorithme de concaténation de trames est alors calibré pour générer toujours un minimum d'échantillons, mais au moins une trame. Une autre solution peut aussi consister à l'activer plusieurs fois au lieu d'une seule fois quand cela est nécessaire pour obtenir un nombre d'échantillons suffisant.

Dans le troisième niveau d'alarme, normalement jamais atteint, aucune trame n'est stockée dans « FIFO 2 ». En variante, le système peut aussi décider d'effectuer une vidange brutale d'une partie de la mémoire tampon (ceci pourra être le cas, si c'est la gestion de " FIFO 1 " qui est activée).

On notera également que suivant les réseaux et les types de problèmes d'asynchronisme, on peut choisir d'activer ou non certains niveaux d'alarme. Par exemple dans le cas « d'asynchronisme faible », les niveaux d'alarme 1 et 2 peuvent être regroupés, et la solution simple de remplacement de deux trames par une seule peut alors être le seul traitement actif.

### 3. 2 Seuils d'alarme

On va maintenant décrire de façon plus détaillée les seuils d'alarme et leur gestion.

Comme cela a été expliqué précédemment, la mémoire de référence est déclarée en état d'alarme 1, lorsque son remplissage est supérieur au seuil 1 ; cet état reste actif jusqu'à ce que le remplissage devienne inférieur au seuil 0. L'état 1 suit donc un fonctionnement sous forme d'hysthérésis.

La mémoire est déclarée en état d'alarme 2, si le remplissage devient supérieur au seuil 2, et en état d'alarme 3, si le remplissage est supérieur au seuil 3. Une gestion de ces états d'alarme par hysthérésis peut aussi être envisagée.

Les seuils 0, 1 et 2 sont adaptatifs. Le seuil 3 qui est lui directement lié à la taille maximale tolérée est fixe. L'adaptation de ces seuils est nécessaire pour prendre en charge les différents contextes des communications et les fluctuations au cours du temps de celle-ci. En effet, il convient de pouvoir néanmoins autoriser plus de retard quand il y a beaucoup de gigue dans la communication (la prise de retard au rendu restant le meilleur moyen d'assurer une qualité correcte en présence de gigue). Dans un contexte de gigue importante, il convient donc d'avoir les seuils 0, 1 et 2 à des niveaux assez élevés.

Pour faciliter le traitement, la position des seuils peut correspondre à un nombre entier de la taille des trames échangées entre les différentes tâches du récepteur. Soit Tt cette taille de trames.

Les valeurs initiales de ces seuils peuvent par exemple être les suivantes :
Seuil 0 : 5 x Tt
Seuil 1 : 8 x Tt
Seuil 2 : 12 x Tt
Seuil 3 : 24 x Tt (valeur fixe)

Les seuils 0, 1 et 2 pourront être adaptés ensemble par pas de taille Tt. Les valeurs extrêmes admises peuvent par exemple être de -1 à +8.

Ainsi, par exemple, le seuil 1 peut prendre les valeurs 7x, 8x, 9x, 10x, .... 16x Tt. L'adaptation proprement dite des seuils se fait à partir d'un critère d'adaptation qui est le temps passé en état d'alarme. A cet effet, un pourcentage d'état d'alarme est évalué toutes les N secondes environ (par exemple N = 10). Lorsque ce pourcentage est supérieur à un seuil donné (5%) les seuils d'état d'alarme sont augmentés ; lorsqu'au contraire ces pourcentages sont inférieurs à un seuil minimal donné (0,5%), les seuils d'alarme sont diminués. Pour éviter une trop grande oscillation du système due à une adaptation trop fréquente des seuils, un hysthérésis est appliqué sur la décision d'adaptation. En effet, les seuils ne sont réellement augmentés d'un pas qu'en présence de deux options d'augmentation consécutives et diminuées d'un pas en présence de trois options de diminution consécutives. Il s'écoule donc au minimum 2*N secondes entre deux incréments de seuils et 3*N secondes entre deux décréments de seuils. La procédure d'augmentation des seuils peut être accélérée si un important pourcentage de trames est en alarme. Une procédure accélératrice consiste à incrémenter directement les seuils si par exemple le pourcentage d'alarme est supérieur à 50 %.

Bien entendu, les valeurs seuils données pour les pourcentages d'alarme ne sont fournies qu'à titre indicatif.

### 3.3 Interaction avec le premier traitement

Le premier traitement est le traitement qui déclenche la génération de « fausses » trames sur perte de trames ou trames erronées. Dans le cas où le système est en alarme (surabondance de trames), il devient inutile de générer ces « fausses » trames qui ne vont qu'aggraver le phénomène de surabondance. Toutefois, il est important pour la qualité du rendu acoustique de garder une synchronisation codeur - décodeur en informant le décodeur de la perte de trame (en lançant par exemple, une ou deux générations de fausses trames (mais pas plus)). Le troisième traitement agira en état d'alarme sur le premier traitement pour limiter fortement la génération de « fausses » trames.

### 3.4 Concaténation de trames

Le traitement de concaténation a pour but de raccourcir la durée d'un signal audio numérique contenant de la parole ou de la musique en introduisant le moins de dégradation audible possible. La fréquence d'échantillonnage étant donnée et fixée, on diminue le nombre des échantillons qui sont envoyés à l'appareil de restitution de son. Une solution évidente pour raccourcir une séquence de N échantillons est d'enlever M échantillons régulièrement espacés de la séquence en question. Ceci entraîne l'augmentation de la fréquence fondamentale qui peut être gênante à l'écoute surtout lorsque le rapport M/N est élevé. De plus, on risque de ne plus respecter le théorème d'échantillonnage. Le traitement présenté ci-dessous permet de raccourcir une séquence audio sans modifier la fréquence fondamentale et sans introduire une dégradation audible due à la discontinuité du signal. Ce traitement est basé sur une détection de la valeur de la période « pitch ». Le nombre des échantillons éliminés par cet algorithme ne peut pas être choisi librement, il est un multiple de la valeur du pitch P. On peut toutefois définir le nombre minimal.des échantillons à éliminer Nₑₘᵢₙ qui doit vérifier la relation N_{emin≤}N/2. Comme, dans le cadre du dispositif de gestion de l'asynchronisme d'une transmission audio, le but est de supprimer au moins 50% des échantillons. On fixe avantageusement Nₑₘᵢₙ=N/2. On suppose également que la valeur maximale du pitch P est inférieure à la longueur N de la séquence à raccourcir. Le nombre Ne des échantillons éliminés par l'algorithme est alors le plus petit multiple de la valeur du pitch P qui est supérieur ou égal à Nₑₘᵢₙ : Ne=kP, où k est un entier positif, Nₑ≥Nₑₘᵢₙ>Nₑ-P. La longueur du signal de sortie est alors Nᵣ=N-Nₑ. notons le signal d'entrée à raccourcir s(n), n=1,..., N est le signal de sortie s'(n), n=1,..., Nᵣ. Pour assurer la continuité du signal de sortie, on fait la fusion progressive des premiers et des derniers Nᵣ échantillons du signal s(n) : s'(n)=s(Nₑ=n).w(n)+s(n).(1-w(n)), n=1,..., Nᵣ
où w(n) est une fonction de pondération telle que 0≤w(n)≤1,n=1,...,Nᵣ, et w(n)≤w(n+1),n=1,...,N₁-1. Par exemple, w(n) peut être tout simplement la fonction linéaire w(n)=n/Nᵣ. Pour un signal non voisé où on ne peut pas déterminer le pitch, Ne peut être fixé librement.

La figure 4 représentant des séquences A, B, C et D de signaux illustre la mise en oeuvre du traitement sur un exemple concret. La première séquence (A) montre le morceau de signal s(n) de N=640 échantillons à raccourcir en trait plein. Le but est de raccourcir cette séquence par au moins 320 échantillons, sans changer la fréquence fondamentale, et sans introduire une discontinuité ou autres dégradations audibles. Le pitch de s(n) varie lentement, sa valeur est égale à 49 au début de la séquence et 45 à la fin de la séquence. Le pitch détecté par une méthode de corrélation est P=47. Ainsi, s(n) sera raccourci par k=7 périodes, soit Nₑ=kP=7*47=329 échantillons.

Dans cet exemple on a choisi la pondération linéaire. Les séquences B et C illustrent les deux morceaux de signal de longueur Nᵣ=N-Nₑ=311 déjà pondérés qui seront fusionnés dans la suite. La fusion s'effectue en additionnant ces deux signaux. Sur la séquence C, on peut observer qu'à cause de la légère variation du pitch, ces deux morceaux de signal s(n) sont un peu déphasés. Grâce à la technique de fusion utilisée, ceci n'introduit pas une discontinuité dans le signal de sortie s'(n) (trait plein sur la séquence D). On voit également sur la séquence 4 que le signal raccourci s'(n) reste parfaitement en phase avec les signaux précédant et suivant (trait en tirets sur les figures 1 et 4).

## Revendications

1. Procédé pour la gestion du décodage et de la restitution (14) d'un signal sonore, dans un système de transmission asynchrone, selon lequel on détecte une éventuelle surabondance de remplissage d'une première mémoire tampon (11) et/ou d'une deuxième mémoire tampon (13) située(s) en entrée et/ou en sortie d'un bloc de décodage (12) en comparant le taux de remplissage à au moins un seuil, **caractérisé en ce que**, selon la valeur du taux de remplissage,
- on met en oeuvre une détection d'activité vocale et on supprime les trames considérées comme non actives par cette détection,
- on met en oeuvre un traitement de concaténation sur deux trames successives, pour les compacter en une pseudo-trame de longueur inférieure à celle d'une trame, le rapport de réduction de la longueur de la pseudo-trame par rapport à la longueur des deux trames étant supérieur ou égal à deux.

2. Procédé selon la revendication 1, **caractérisé en ce qu'**on met en oeuvre une détection d'activité vocale et on supprime les trames considérées comme non actives par cette détection, lorsque le taux de remplissage est compris entre un premier et un deuxième seuil et **en ce qu'**on met en oeuvre un traitement de concaténation sur deux trames successives, lorsque le taux de remplissage est compris entre un deuxième et un troisième seuils.

3. Procédé selon la revendication 2, **caractérisé en ce que** le premier et le deuxième seuils sont confondus.

4. Procédé selon l'une des revendications précédentes, **caractérisé en ce qu'**on détecte en entrée ou en sortie d'un bloc de décodage (12) comportant une première mémoire (11) tampon en entrée et/ou en sortie une éventuelle trame manquante ou erronée ou une éventuelle absence d'échantillons à restituer et on génère une fausse trame qui assure la continuité du rendu audio lorsqu'une telle trame manquante ou erronée ou une telle absence d'échantillons à restituer est détectée.

5. Procédé selon la revendication 4, **caractérisé en ce que** dans le cas où le bloc de décodage (12) met en oeuvre de façon cyclique son traitement de décodage par rapport au contenu de la première mémoire tampon (11), on met en oeuvre avec la même fréquence cyclique la détection d'une éventuelle trame manquante ou erronée ou d'une éventuelle absence d'échantillons à restituer, cette détection intervenant suffisamment en avance par rapport au traitement de décodage de façon à permettre une génération de fausse trame en temps voulu.

6. Procédé selon l'une des revendications 4 et 5, **caractérisé en ce qu'**on ne génère pas de fausse trame lorsqu'une détection de trame manquante ou erronée intervient sur une trame pour laquelle une absence d'échantillons a déjà été détectée.

7. Procédé selon l'une des revendications 4 à 6, **caractérisé en ce que** dans le cas où le système est d'un type qui peut arrêter volontairement d'émettre des trames, on mémorise d'une trame à l'autre le type de trame précédemment générée et on détermine en fonction de cette information s'il faut générer des fausses trames ou des trames de silence.

8. Procédé selon l'une des revendications précédentes, **caractérisé en ce que** dans un traitement de concaténation de deux trames successives on pondère les échantillons de façon à donner plus d'importance aux premiers échantillons de la première trame et aux derniers échantillons de la deuxième.

9. Procédé selon l'une des revendications précédentes, **caractérisé en ce que** le (ou les) seuil(s) est (ou sont) adaptatif(s).

10. Procédé selon la revendication 9, **caractérisé en ce que** l'adaptation d'un seuil est fonction du temps passé avec un taux de remplissage supérieur à un seuil donné.

11. Dispositif de restitution d'un signal de parole comportant une première mémoire tampon (11) recevant des trames codées, des moyens mettant en oeuvre un traitement de décodage (12) sur les trames mémorisées. dans ladite première mémoire tampon (11), une deuxième mémoire (13) tampon recevant des trames décodées en sortie des moyens de décodage, des moyens de restitution sonore (14) recevant les trames en sortie de la deuxième mémoire tampon (13), **caractérisé en ce qu'**il comporte en outre des moyens aptes à détecter une éventuelle surabondance de remplissage de la première et/ou de la deuxième mémoire tampon en comparant le taux de remplissage à au moins un seuil et des moyens qui, en fonction de la valeur des taux de remplissage, mettent en oeuvre une détection d'activité vocale et suppriment les trames considérées comme non actives par cette détection et mettent en oeuvre un traitement de concaténation sur deux trames successives, pour les compacter en une pseudo-trame de longueur inférieure à celle d'une trame, le rapport de réduction de la pseudo-trame par rapport à la longueur des deux trames étant supérieur ou égal à deux.

## Patentansprüche

1. Verfahren zur Verwaltung der Dekodierung und der Wiederherstellung (14) eines Tonsignals in einem asynchronen Übertragungssystem, bei dem ein eventueller Überlauf eines ersten Pufferspeichers (11) und/oder eines zweiten Pufferspeichers (13), der/die am Eingang und/oder am Ausgang eines Dekodierungsblocks (12) angeordnet ist/sind, erfasst wird, indem der Belegungsgrad mit mindestens einem Schwellenwert verglichen wird, **dadurch gekennzeichnet, dass** je nach dem Wert des Belegungsgrads
- eine Erfassung der Stimmaktivität durchgeführt und die von dieser Erfassung als inaktiv betrachteten Rahmen unterdrückt werden,
- an zwei aufeinander folgenden Rahmen eine Konkatenierung durchgeführt wird, um sie in einen Pseudorahmen zu kompaktieren, dessen Länge geringer ist als die eines Rahmens, wobei das Verhältnis der Längenreduzierung des Pseudorahmens gegenüber der Länge der beiden Rahmen größer oder gleich zwei ist.

2. Verfahren nach Anspruch 1, **dadurch gekennzeichnet, dass** eine Erfassung der Stimmaktivität durchgeführt und die von dieser Erfassung als inaktiv betrachteten Rahmen unterdrückt werden, wenn der Belegungsgrad zwischen einem ersten und einem zweiten Schwellenwert liegt, und dass eine Konkatenierung von zwei aufeinander folgenden Rahmen erfolgt, wenn der Belegungsgrad zwischen einem zweiten und einem dritten Schwellenwert liegt.

3. Verfahren nach Anspruch 2, **dadurch gekennzeichnet, dass** der erste und der zweite Schwellenwert zusammenfallen.

4. Verfahren nach einem der vorhergehenden Ansprüche, **dadurch gekennzeichnet, dass** am Eingang oder am Ausgang eines Dekodierungsblocks (12) mit einem ersten Pufferspeicher (11) am Eingang und/oder am Ausgang ein eventuell fehlender oder fehlerhafter Rahmen oder ein eventuelles Fehlen von wiederherzustellenden Abtastwerten erfasst und ein falscher Rahmen erzeugt wird, der für die Kontinuität der Audiowiedergabe sorgt, wenn ein solcher fehlender oder fehlerhafter Rahmen oder ein solches Fehlen von wiederherzustellenden Abtastwerten erfasst wird.

5. Verfahren nach Anspruch 4, **dadurch gekennzeichnet, dass** falls der Dekodierungsblock (12) in zyklischer Weise sein Dekodieren hinsichtlich des Inhalts des ersten Pufferspeichers (11) durchführt, mit der gleichen zyklischen Frequenz das Erfassen eines eventuell fehlenden oder fehlerhaften Rahmen oder eines eventuellen Fehlens von wiederherzustellenden Abtastwerten durchgeführt wird, wobei dieses Erfassen in ausreichendem Zeitabstand vor dem Dekodieren durchgeführt wird, um das Erzeugen eines falschen Rahmens in der gewünschten Zeit zu ermöglichen.

6. Verfahren nach Anspruch 4 oder 5, **dadurch gekennzeichnet, dass** kein falscher Rahmen erzeugt wird, wenn das Erfassen von fehlenden oder fehlerhaften Rahmen an einem Rahmen erfolgt, an dem bereits ein Fehlen von Abtastwerten festgestellt wurde.

7. Verfahren nach einem der Ansprüche 4 bis 6, **dadurch gekennzeichnet, dass** wenn das System von der Art ist, bei der nach Wunsch das Senden von Rahmen unterbrochen werden kann, die Art des zuvor erzeugten Rahmens von einem Rahmen zum anderen gespeichert und abhängig von dieser Information bestimmt wird, ob falsche Rahmen oder Rahmen ohne Ton erzeugt werden müssen.

8. Verfahren nach einem der vorhergehenden Ansprüche, **dadurch gekennzeichnet, dass** bei einer Konkatenierung von zwei aufeinander folgenden Rahmen die Abtastwerte so gewichtet werden, dass die ersten Abtastwerte des ersten Rahmens und die letzten Abtastwerte des zweiten Rahmens höher gewichtet werden.

9. Verfahren nach einem der vorhergehenden Ansprüche, **dadurch gekennzeichnet, dass** der (oder die) Schwellenwert(e) adaptiv ist (sind).

10. Verfahren nach Anspruch 9, **dadurch gekennzeichnet, dass** die Anpassung eines Schwellenwerts von der Zeit abhängt, die bei mit einem Belegungsgrad verstrichen ist, der höher ist als ein gegebener Schwellenwert.

11. Vorrichtung zur Wiederherstellung eines Sprachsignals, umfassend einen ersten Pufferspeicher (11), der die kodierten Rahmen aufnimmt, Mittel, die eine Dekodierung (12) an den im ersten Pufferspeicher (11) gespeicherten Rahmen durchführen, einen zweiten Pufferspeicher (13), der die dekodierten Rahmen am Ausgang der Dekodierungseinrichtung aufnimmt, Mittel zur Tonwiederherstellung (14), die die Rahmen am Ausgang des zweiten Pufferspeichers (13) aufnimmt, **dadurch gekennzeichnet, dass** sie darüber hinaus Mittel umfasst, die einen eventuellen Überlauf des ersten und/oder des zweiten Pufferspeichers erfassen können, indem sie den Belegungsgrad mit mindestens einem Schwellenwert vergleichen, sowie Mittel, die abhängig vom Wert des Belegungsgrads eine Erfassung der Stimmaktivität durchführen und die als inaktiv betrachteten Rahmen unterdrücken und eine Konkatenierung von zwei aufeinander folgenden Rahmen durchführen, um sie in einen Pseudorahmen zu kompaktieren, dessen Länge geringer ist als die eines Rahmens, wobei das Verhältnis der Längenreduzierung des Pseudorahmens gegenüber der Länge der beiden Rahmen größer oder gleich zwei ist.

## Claims

1. A method of managing the decoding and playback (14) of a sound signal in an asynchronous transmission system, in which any overabundance of filling of a first buffer memory (11) and/or of a second buffer memory (13) situated at the inlet and/or at the outlet of a decoding block (12) is detected by comparing the filling level with at least one threshold, the method being **characterized in that**, depending on the value of the filling level:
- voice activity detection is implemented and frames considered by said detection as being non-active are eliminated; and
- concatenation processing is implemented on two successive frames to compact them into a pseudo-frame of length less than or equal to one frame, the length reduction ratio of the pseudo-frame relative to the length of the two frames being greater than or equal to two.

2. A method according to claim 1, **characterized in that** voice activity detection is implemented and frames considered by said detection as being not active are eliminated whenever the filling level lies between a first threshold and a second threshold, and **in that** concatenation processing is implemented on two successive frames whenever the filling level lies between a second threshold and a third threshold.

3. A method according to claim 2, **characterized in that** the first and second thresholds are the same.

4. A method according to any preceding claim, **characterized in that** detection is performed at the inlet or the outlet of a decoding block (12) having a first buffer memory (11) at its inlet and/or its outlet to determine whether any frame is missing or erroneous or whether any samples to be played back are absent, and a fake frame is generated to ensure continuity in the audio playback on detecting such a missing or erroneous frame, or on detecting such an absence of samples for playback.

5. A method according to claim 4, **characterized in that** when the decoding block (12) implements its decoding processing in cyclical manner relative to the content of the first buffer memory (11), detection of any missing or erroneous frame or of any absence of samples to play back is implemented at the same cyclical frequency, said detection taking place far enough in advance relative to the decoding process to make it possible to generate a fake frame in good time.

6. A method according to claim 4 or claim 5, **characterized in that** a fake frame is not generated when a missing or erroneous frame is detected for a frame on which an absence of samples has already been detected.

7. A method according to any one of claims 4 to 6, **characterized in that**, for a system of the type which can voluntarily stop sending frames, the type of the previously-generated frame is stored from one frame to the next, and this information is used to determine whether to generate fake frames or to generate frames of silence.

8. A method according to any preceding claim, **characterized in that** in processing for concatenating two successive frames, the samples are weighted in such a manner as to give more importance to the first samples of the first frame and to the last samples of the second frame.

9. A method according to any preceding claim, **characterized in that** the threshold(s) is/are adaptive.

10. A method according to claim 9, **characterized in that** a threshold is adapted as a function of the length of time passed with a filling level above a given threshold.

11. A device for playing back a speech signal, the device comprising a first buffer memory (11) receiving coded frames, means implementing decoding processing (12) on the frames stored in said first buffer memory (11), a second buffer memory (13) receiving decoded frames output by the decoding means, and sound playback means (14) receiving the frames output by the second buffer memory (13), the device being **characterized in that** it further comprises means capable of detecting any overabundance of filling of the first and/or of the second buffer memory by comparing the filling level with at least one threshold, and means which, as a function of the value of the filling level, implement voice activity detection and eliminate frames considered as being non-active, and?? implement concatenation processing on two successive frames to compact them into a pseudo-frame of length less than or equal to one frame, the reduction ratio of the pseudo-frame relative to the length of the two frames being greater than or equal to two.
